(19) Europäisches Patentamt
European Patent Office
Office européen des brevets

(11) Publication number: **0 457 276 B1**

(12) **EUROPEAN PATENT SPECIFICATION**

(45) Date of publication of patent specification: **09.08.95**

(51) Int. Cl.[6]: **C08K 5/10**, C08L 67/06

(21) Application number: **91107795.6**

(22) Date of filing: **14.05.91**

(54) **Unsaturated polyester resins.**

(30) Priority: **16.05.90 IT 2031990**

(43) Date of publication of application:
**21.11.91 Bulletin 91/47**

(45) Publication of the grant of the patent:
**09.08.95 Bulletin 95/32**

(84) Designated Contracting States:
**AT BE CH DE DK ES FR GB IT LI LU NL SE**

(56) References cited:
**EP-A- 0 126 329**
**DE-B- 1 694 099**
**US-A- 3 574 787**

(73) Proprietor: **LONZA S.P.A.**
**Via Vittor Pisani, 31**
**I-20124 Milano (IT)**

(72) Inventor: **Caramaschi, Guiseppe Antonio, Dr.**
**Via Dante 6**
**Montevarchi (Arezzo) (IT)**
Inventor: **Sanchioni, Sergio, Dr.**
**Via Torino 4/B**
**Terranuova B.ni (Arezzo) (IT)**
Inventor: **Bocci, Marco**
**Via 3 Novembre 11**
**S. Giovanni V.no. (Arezzo) (IT)**
Inventor: **Leonardi, Maurizio, Dr.**
**Via Gallenga 72**
**Perugia (IT)**

(74) Representative: **Weinhold, Peter, Dr. et al**
**Patentanwälte**
**Dr. Weinhold, Dannenberg,**
**Dr. Gudel, Schubert**
**Siegfriedstrasse 8**
**D-80803 München (DE)**

**EP 0 457 276 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the field of unsaturated polyester resins (which are indicated in the following text by the symbol UPR) and in particular to the field of substances which can be used as accelerating and, crosslinking monomers in the polymerisation (or curing) of UPRs.

UPRs, in their most common form, consist of, as is known for instance of Ullmann's Enzyklopädie der techn. Chemie 4 edition Vol. 19, p. 79.

a) An unsaturated polyester resin, commonly called alkyd, obtained in polycondensation reaction by reacting under appropriate conditions one or more glycols with one or more carboxylic acids or anhydrides thereof, of which at least one is a dicarboxylic acid (or anhydride) ethylenically unsaturated in the $\alpha$, $\beta$-position relative to the carboxyls.

In general, the alkyd represents 40-90% of the UPR.

b) One or more vinyl monomers which act as solvent and at the same time as crosslinking agent for the alkyd, in a concentration of 10-60% relative to the UPR.

c) Polymerization inhibitors and/or stabilisers which allow the UPR to be handled and transported under safe conditions. These substances are added to the resin in a proportion of 50-1000 ppm.

d) Technological additives of various types, incorporated in the UPR, in order to make it suitable for specific applications (concentration about 0,5-2%).

e) Substances (commonly called accelerators or promoters) which are capable of appropriately modifying the polymerization kinetics of the UPR, with a view to its end use (concentration about 0,05-1%).

Although the substances listed under a), b) and c) are always present in the UPR, the substances listed under items d) and e) may or may not be present, as the case may be.

The vinyl monomers (mentioned under item b) above) are products which, when appropriately activated by an addition of catalysts, react with the double bond of the $\alpha$, $\beta$-unsaturated dicarboxylic acid incorporated in the alkyd. The reaction which takes place is a crosslinking reaction, commonly also called curing, which leads to a crosslinked product, whose chemical, physical and mechanical characteristics depend on the raw materials of the UPR and on the curing conditions.

Among the vinyl monomers most commonly used hitherto for curing UPRs, styrene, $\alpha$-methylstyrene, p- or m-methyl-styrene, divinylbenzene, diallyl phthalate and its prepolymers, diallyl isophthalate, diallyl terephthalate and its prepolymers, diallyl isophthalate, diallyl terephthalate, N-vinylpyrrolidone, triallyl cyanurate, diallylmelamine and the like, by themselves or in various mixtures with one another, may be mentioned. Other vinyl monomers which can be used are alkyl-styrenes and other allyl, acrylate or methacrylate esters. Although the most widest used of these has been styrene, the latter causes problems of polluting the work environment, so that legislation in various countries is becoming increasingly restrictive with regard to its use.

Various products such as metal salts, for example of cobalt, manganese, vanadium and iron, tertiary aromatic amines such as, for example, dimethylaniline, dimethyl-p-toluene, diethylaniline, phenyldiethanolamine and the like have hitherto been used as accelerators or promoters of the curing reaction (for these, see item e) above).

These known accelerators have been found not to be free of disadvantages, including, in particular, a relatively low efficiency thereof, which required elevated temperatures and/or longer curing times in certain cases. Thus, for example, such accelerators gave complete polymerization of the UPR only when hot, at temperatures from 50 to 180 °C. Moreover, such accelerators require relatively long crosslinking times, which proved inadequate for use on modern machines which, for their high productivity, require ever faster curing reactions.

The US patent 3 574 787 further discloses acetoacetic esters as additional accelerators for unsaturated polyester systems. These conventional acetoacetic esters such as the acetoacetic esters of mono- or difunctional alcohols also show a relatively low efficiency, but in particular they do not act as crosslinking monomers and therefore remain unchanged in the polymer lattice. Their concentration is therefore limited to about 1% by weight relative to the polymer composition because otherwise the properties of the polymer gets unfavourably influenced.

The principal object of the present invention is to provide UPRs which have improved curing characteristics and are therefore suitable for use on modern production machinery and high productivity.

A further object of the present invention is to provide substances capable of improving the curing or crosslinking of UPRs.

In particular, a specific object of the present invention is to provide substances which, in the polymerization of the UPR, perform a dual function as both crosslinking agent and accelerator.

A further object of the present invention is to provide substances giving improved performance as compared with both known crosslinking agents and known accelerators hitherto used for curing UPRs.

A further object of the present invention is to provide a process for preparing the UPRs.

These and other objects, which will become clear below, are achieved by an unsaturated polyester resin composition according to the present invention, comprising at least one unsaturated polyester resin and 10 to 60% by weight, relative to said composition, of one or more crosslinking monomers, characterised in that said crosslinking monomers comprise at least one compound of the formula (I)

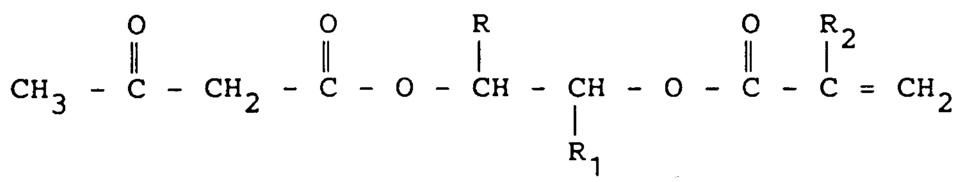

where R, $R_1$ and $R_2$ are H or a methyl group.

It has now been found, surprisingly, that compounds of the formula (I) above perform in the curing (crosslinking) process of unsaturated polyester resins not only a crosslinking action when substituted in this way for traditional vinyl monomers, but also an accelerating action. Not only this, but the accelerating efficiency of the compounds of the formula (I) according to the invention is significantly higher that that of the known accelerators, above all in polymerizations at ambient temperature.

In their role as crosslinking agents, the compounds (I) are substitute products in particular of styrene and, in this function, owing to their relatively low vapour pressure, diminish the styrene concentration in the work environment or even reduce it right down to zero.

However, even it they are used in conjunction with other vinyl monomers, in particular styrene, the compounds (I) allow great advantages to be obtained in terms of productivity and also in ecological terms, in as much as the reduction in the work cycle times due to their accelerating efficiency more or less proportionally reduces the evaporation of styrene or other relatively volatile monomers.

Moreover, in their role as accelerators, the compounds (I) are so active that they allow curing of UPRs (such as, for example, those containing diallyl phthalate as additional conventional monomer) at ambient temperature, which hitherto have been completely curable only when hot.

The monomers can thus be applied at ambient temperature or also when hot, and they do not exclude conjoint use either with vinyl monomers or with hitherto used conventional accelerators or promoters.

Examples of some compounds corresponding to the formula (I) described above are:

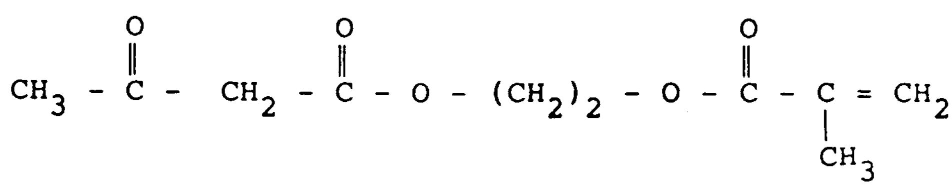

Acetoacetoxy-ethyl methacrylate

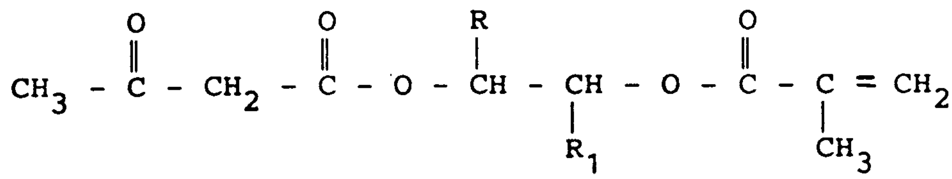

(where: R = H, $R_1$ = $CH_3$, or: R = $CH_3$, $R_1$ = H)

Acetoacetoxy-isopropyl methacrylate

Thus the surprising character of the present invention rests precisely in what has been stated above.

In fact, acetylacetone or similar products are well known as co-accelerators and, in their turn, the vinyl compounds, allyl compounds, acrylates and methacrylates are widely used as monomers in UPR compositions, but their conjoint presence within the same molecule evidently confers a strong synergism on the catalytic system, in such a way that complete polymerization of some resin types at ambient temperature becomes possible, such complete polymerization hitherto having been obtainable only when hot.

In should also be stressed that the compounds are, as already stated, also crosslinking monomers and, as such, do not remain free in the cured polymer but enter the polymeric network to form a part thereof, which is not the case with the common polymerization accelerators or promoters. They can therefore be used by themselves at concentrations of 10-60% by weight, preferably at 20-50% by weight, more preferably at 25-45% by weight for the function of crosslinking monomers, even in the absence of monomers of the conventional type.

On the other hand, if the compounds (I) are used conjointly with conventional crosslinking agents or accelerators, the total monomer concentration relative to UPR is 10-60% by weight. It is then preferable to employ concentrations of the compounds (I) of 0,1-59% by weight, more preferably of 0,1-30% by weight, relative to the UPR composition, and concentrations of said conventional compounds of 1-59,9%, preferably of 1-30% by weight. For example, one or more compounds (I) can be employed with one or more monomers such as styrene, p-methylstyrene or other alkylstyrenes, tetrachloroethylene, vinyltoluene, N-vinylpyrrolidone, diallyl phthalate or prepolymers thereof, and the like. Preferably styrene or diallylphthalate is employed as additional monomer.

If the compounds (I) are conjointly used with diallylphthalate as conventional crosslinking agent curing can be effected already at ambient temperature.

Moreover, the compounds (I) can be employed together with conventional curing accelerators such as those mentioned above, for example together with salts of cobalt, manganese, vanadium and iron, with $\beta$-diketones selected from derivatives of acetylacetone, derivatives of acetoacetamide and esters of acetoacetic acid, and with tertiary aromatic amines. Such conventional accelerators are used in quantities of 0,05-1 part by weight per 100 parts of alkyd. For the abovementioned metal salts, these concentrations refer to the metal as such.

As the unsaturated polyesters or alkyds which can be used with these, those monomeric compounds (I) are used in general which have been obtained by the reaction of one or more glycols with one ore more ethylenically $\alpha,\beta$-unsaturated dicarboxylic acids and, if appropriate, also with one or more saturated dicarboxylic acids.

The glycols can be selected, for example, from ethylene glycol, 1,2-propylene glycol, 1,3-butanediol, 1,4-butanediol, diethylene glycol, dipropylene glycol, neopentyl glycol and the bis-($\beta$-hydroxypropyl) ether of bisphenol A.

In general, any other type of chemical compound having two hydroxyl groups in the molecule itself, for example polymeric diols, can be used.

With regard to the ethylenically $\alpha,\beta$-unsaturated dicarboxylic acids, it is possible to use, for example, maleic acid, fumaric acid, citraconic acid, itaconic acid, mesaconic acid and the like, or the anhydrides thereof. Other unsaturated dicarboxylid acids can be used for the same purpose.

Among the saturated dicarboxylic acids which can be incorporated in the unsaturated polyester according to the invention, phthalic acid (or anhydride), tetrahydrophthalic acid (or anhydride), hexahydrophthalic acid (or anhydride), isophthalic acid, terephthalic acid, adipic acid and succinic acid (or anhydride) may be mentioned.

In this case too, other polycarboxylic acids may be used, but while the presence of the unsaturated dicarboxylic acids (or anhydrides) is indispensable for obtaining a UPR, the saturated dicarboxylic acids indicated above can also be absent from the structure of the alkyd.

In particular cases, when it is desired, for example, to obtain self-extinguishing products, dibromoneopentyl glycol, the tetrabromo derivative of bisphenol A, tetrabromophthalic or tetrachlorophthalic acid (or anhydride), endomethylenehexachlorophtalic acid (HET acid) or the anhydride thereof (chlorendic anhydride) and the like can be used as components of the alkyd.

Finally, monohydric alcohols or monobasic carboxylic acids are used as chain terminators and, if it is desired to obtain branched chains, polyhydric alcohols such as, for example, glycerol, trimethylolpropane or pentaerithritol, can be used.

The unsaturated polyester resin or alkyd is present in the composition according to the invention in concentrations of generally between 40 and 90%.

As the polymerization inhibitors and/or stabilizers which can be used in the UPRs according to the invention, hydroquinone, p-benzoquinone, t-butyl-hydroquinone, toluhydroquinone, tertiary-butyl-catechol, quaternary ammonium salts, copper salts and the like may be mentioned.

The technological additives which can optionally be incorporated in the UPRs according to the invention include surfactants, viscosity depressants, thixotropic agents, various pigments, paraffins and waxes, UV stabilisers, and the like.

The curing reaction of the UPRs according to the invention can take place either at ambient temperature or when hot (generally up to about 180 °C) and it is initiated by a catalyst which is dissolved or dispersed in the resin, usually just before curing. The most commonly used catalysts, in a percentage quantity of 0,1-3% relative to the UPR, are the peroxides, of which hydrogen peroxide, methyl ethyl ketone peroxide, benzoyl peroxide, lauryl peroxide, dicumyl peroxide, p-tertiarybutyl perbenzoate, acetylacetone peroxide, methyl isobutyl ketone peroxide, and the like, may be mentioned by way of example.

As is well known in the field, not only the curing catalyst but also inert inorganic fillers (silicates, carbonates and the like), additives capable of compensating for the shrinkage which manifests itself during curing (low-profile or low shrink additives) and/or a reinforcement of glass fibre, consisting of filaments of small dimensions, of a continuous filament or of a so-called mat (glass fibre felt) or fabrics of glass or other fibres (carbon, aramid fibres and the like), can be added to the UPR before curing, in order to improve the mechanical properties of the finished product.

The examples which follow are given solely for illustrative purpose and in no way limit the various possible forms of realizing the invention.

Example 1

This example illustrates the effect of one of the accelerator monomers, which are the subject of the present invention, namely of acetoacetoxy-ethyl methacrylate (from now on indicated by the symbol AAEMA), on the polymerization.

With reference to Table No. 1a, the UPRs indicated are all based on the same alkyd prepared according to a formulation involving the use of proportional quantities of 1,05 mol of 1,2-propanediol, 0,5 mol of phthalic anhydride and 0,5 mol of maleic anhydride. These raw materials, placed into a flask fitted with a stirrer, are heated under a nitrogen stream from ambient temperature up to 200 °C, the reaction then being continued at this temperature until the acid number of the mass has fallen to 45 mg of KOH/g. The water of reaction is removed by means of a distillation column placed on top of the flask and regulated in such a way that the water (with small quantities of glycol) is separated off at the top and most of the glycol is refluxed into the reactor. The alkyd obtained is stabilized with about 200 ppm of hydroquinone and then dissolved at about 50 °C in the monomers and/or monomer accelerators indicated in Table No. 1a. Depending on the monomers and/or monomer accelerators used, 10 different UPRs were obtained , to which cobalt octoate and a peroxide initiator (see indications in the Table) to initiate the polymerization at 25 °C were added.

The polymerization test was carried out according to UNI standard 476/88 which requires the recording of the so-called gelling time, of the polymerization time and of the so-called delta time (or curing time) and of the maximum temperature reached during the polymerization (exothermic peak).

When examining the data in Table No. 1a, it is found that AAEMA greatly reduces the polymerization times and, at the same time, that this product can be used as a substitute monomer for styrene (cf. UPR No. 6), and it also shows a higher polymerization rate as compared with the latter.

The test with the UPR Nos. 7-10 also shows that the accelerating effect is due to the presence of both the acetylacetone structure and the unsaturated group (in this case represented by a methacrylate group) within the AAEMA molecule.

In fact, it is found that:

- acetylacetone by itself has an accelerating effect at low concentration (0,5, cf. UPR No. 7), but does not show a further significant effect at higher concentration (10%, cf. UPR No. 8); in this latter case, acetylacetone is certainly unsuitable because, since this monomer is not reactive towards the alkyd, it remains free in the interior of the crosslinked polymer, modifying the mechanical properties thereof and making it susceptible to evaporation losses, extraction by water or solvents, and so forth.
- methyl methacrylate (indicated by the symbol MMA) does not much alter the polymerization times as compared with UPR containing only styrene (compare UPR No. 10 with UPR No. 1).
- the acetylacetone/MMA mixture (cf. UPR No. 9) introduces into the system the same groups which are present in the AAEMA molecule, but the polymerization times are much longer than those obtained with UPR No. 5 which is fairly similar to UPR No. 9 as a composition, but differs from it precisely by the fact that, in UPR No. 5, the two groups (acetylacetate and unsaturated group) are within the same molecule, whereas they form part of two different substances in UPR No. 9. This demonstrates that the strong accelerating effect is due to the presence of the two above-mentioned

functions within the same molecule.

Analogous results are obtained with an alkyd formulated in a different way. Table No. 1b gives the results observed on UPRs obtained from an alkyd prepared as described above, but starting from proportional raw material quantities of 0,8 mol of 1,3-butanediol, 0,25 mol of ethylene glycol, 0,3 mol of isophathalic acid and 0,7 mol of fumaric acid. The final acid number of the alkyd was 42, while the stabilizer was toluhydroquinone, in a proportion of 200 ppm.

This demonstrates that the accelerating effect of the promoter monomers proposed by us is independent of the structure of the alkyd.

Table No. 1a UPR polymerization in styrene/AAEMA and in styrene/MMA at 25°C (Alkyd = 65%; monomers = 35%)

| MONOMERS | UPR No. 1 | UPR No. 2 | UPR No. 3 | UPR No. 4 | UPR No. 5 | UPR No. 6 | UPR No. 7 | UPR No. 8 | UPR No. 9 | UPR No. 10 |
|---|---|---|---|---|---|---|---|---|---|---|
| Styrene (%) | 35 | 34,5 | 34,0 | 30,0 | 25,0 | - | 34,5 | 25,0 | 25,0 | 25,0 |
| AAEMA (%) | - | 0,5 | 1,0 | 5,0 | 10,0 | 35,0 | - | - | - | - |
| Acetylacetone (%) | - | - | - | - | - | - | 0,5 | 10,0 | 5,0 | - |
| MMA (%) | - | - | - | - | - | - | - | - | 5,0 | 10,0 |
| POLYMERIZATION PARAMETERS | | | | | | | | | | |
| Gelling time | 50' | 35'30" | 28'30" | 13' | 8'20" | 8'05" | 40'20" | 36' | 38'25" | 48' |
| Polymerization time | 69' | 47' | 39' | 19'50" | 13'30" | 12'55" | 55'50" | 49'40" | 54'10" | 69'15" |
| Peak temperature (°C) | 155 | 160 | 162 | 164 | 165 | 140 | 150 | 155 | 150 | 147 |
| Delta time | 19' | 11'30" | 10'30" | 6'50" | 5'10" | 4'50" | 15'30" | 13'40" | 15'45" | 21'15" |

Polymerization conditions:

- Methyl ethyl ketone peroxide (50% solution in di-n-butylphthalate): 0,8 part/100 parts of UPR
- Co octoate (6% solution in xylene) 0,3 part/100 parts of UPR

Table No. 1b: UPR polymerizations in styrene/AAEMA and in styrene/acetoacetone/MMA at 25°C.
(alkyd = 65%; vinyl monomers = 35%)

| VINYL MONOMERS | UPR No. 11 | UPR No. 12 | UPR No. 13 | UPR No. 14 |
|---|---|---|---|---|
| Styrene (%) | 35 | 30,0 | - | 25,0 |
| AAEMA (%) | - | 5,0 | 35,0 | - |
| Acetylacetone (%) | - | - | - | 5,0 |
| MMA (%) | - | - | - | 5,0 |
| POLYMERIZATION PARAMETERS | | | | |
| Gel time | 35'20" | 11'40" | 6'14" | 25'30" |
| Polymerization time | 50'55" | 19'15" | 10'52" | 37'42" |
| Peak temperature (°C) | 160 | 175 | 169 | 164 |
| Delta time | 15'35" | 7'35" | 4'38" | 12'12" |

Polymerization conditions:

- Methyl-ethyl-ketone peroxide (50% solution in di-n-butylphthalate): 0,8 parts/100 parts UPR
- Co octoate (6% solution in xylene) : 0,3 parts/100 parts UPR

Example No. 2

For the UPRs of this Example (Table No. 2), the same alkyd as in Example 1 Table No. 1a, was used. It is shown that the accelerator monomers which are the subject of the present invention (in the particular

case AAEMA) are also effective with other monomers of the conventional type, other than styrene.

Table 2: Polymerization of UPR at 25°C in various vinyl monomers alkyd = 65%; vinyl monomers = 35%)

| VINYL MONOMERS | UPR No. 15 | UPR No. 16 | UPR No. 17 | UPR No. 18 | UPR No. 19 | UPR No. 20 | UPR No. 21 | UPR No. 22 |
|---|---|---|---|---|---|---|---|---|
| p-Methyl-styrene (%) | 35,0 | 30,0 | - | - | - | - | - | - |
| tetrachlorethylene (%) | - | - | 35,0 | 30,0 | - | - | - | - |
| N-vinyl-pyrrolidone(%) | - | - | - | - | 35,0 | 30,0 | - | - |
| vinyl-toluene (%) | - | - | - | - | - | - | 35,0 | 30,0 |
| AAEMA (%) | - | 5,0 | - | 5,0 | - | 5,0 | - | 5,0 |
| POLYMERIZATION PARAMETERS | | | | | | | | |
| Gel time | 40'20" | 10'30" | 58' | 18'40" | 35'30" | 7'42" | 45' | 13'40" |
| Polymerization time | 60'50" | 16'45" | 84'40" | 27'50" | 55'40" | 12'52" | 69' | 22'05" |
| Peak temperature (°C) | 142 | 160 | 135 | 145 | 145 | 165 | 138 | 155 |
| Delta time | 20'30" | 6'15" | 26'40" | 9'10" | 20'10" | 5'10" | 24' | 8'25" |

Polymerization conditions:
- Methyl-ethyl-ketone peroxide (50% solution in di-n-butylphthalate): 0,8 parts/100 parts UPR
- Co-octoate (6% solution in xylene) 0,3 parts/100 parts UPR

Example No. 3

For the tests cited in this example (cf. Table No. 3), the UPRs are based on an alkyd prepared by the procedures described in Example 1 from proportional raw material quantities of 1,08 mol of 1,2-propanediol, 0,3 mol of phthalic anhydride and 0,7 mol of maleic anhydride. The condensation reaction was stopped when the acid number of the alkyd became equal to 35 mg KOH/g, whereupon 200 ppm of hydroquinone stabilizer were added.

This example describes the effect of the accelerator monomers which are the subject of the present invention on the polymerization of UPRs in which the monomer consists of diallyl phthalate (indicated by the symbol DAP).

It is known to all those skilled in this field, that UPRs are polymerizable in DAP at times and with results which are industrially acceptable only at temperatures higher than ambient temperature. This is confirmed by the UPRs No. 23 and Nos. 28, 29 and 30 (Table No. 3) which are clearly underpolymerized.

To demonstrate this fact, the UPRs of this example were examined not only with respect to the polymerization times, but also with respect to their surface hardness (Barcol hardness after 24 hours' polymerization) and unreacted DAP (this analysis is carried out by subjecting the cured polymer to extraction with a solvent, in general acetone, and then analysing by gas chromatography the unreacted monomer which has been extracted by the solvent).

It is clear from the result that if the UPR does not contain AAEMA DAP reacts only partially, even in the DAP/styrene systems, in which only the latter participates to a significant extent in the polymerization reaction, while the DAP remains partially unchanged in the interior of the polymer, plasticising it and reducing the surface hardness.

Table No. 3: UPR polymerization in DAP/AAEMA and in DAP/styrene at 25°C.
(alkyd = 55%; vinyl monomers = 45%)

| VINYL MONOMERS | UPR No. 23 | UPR No. 24 | UPR No. 25 | UPR No. 25 | UPR No. 27 | UPR No. 28 | UPR No. 29 | UPR No. 30 | UPR No. 31 |
|---|---|---|---|---|---|---|---|---|---|
| DAP (%) | 45,0 | 33,8 | 22,5 | 11,2 | - | 33,8 | 22,5 | 11,2 | - |
| Styrene (%) | - | - | - | - | - | 11,2 | 22,5 | 33,8 | 45,0 |
| AAMEA (%) | - | 11,2 | 22,5 | 33,8 | 45,0 | - | - | - | - |
| POLYMERIZATION PARAMETERS | | | | | | | | | |
| Gel time | 26'50" | 26'40" | 18'47" | 12'53" | 9'45" | 23'10" | 20'30" | 18'10" | 16'50" |
| Polymerization time | 56'50" | 45' | 28' | 19' | 14'10" | 40'45" | 36'15" | 31'18" | 27'10" |
| Peak temperature (°C) | 46 | 153 | 153 | 136 | 105 | 142 | 155 | 165 | 191 |
| Delta time | 30' | 18'20" | 9'13" | 6'07" | 4'25" | 17'35" | 15'45" | 13'08" | 10'20" |
| Barcol hardness (24 h) | n.det. | 45 | 45 | 45 | 40 | n.det. | n.det. | n.det. | 45 |
| Not reacted DAP (%) | 7,7 | traces | traces | traces | - | 3,9 | 1,5 | 1,2 | - |

Polymerization conditions:

- Methyl-ethyl-ketone peroxide (50% solution in di-n-butylphthalate): 1,5 parts/100 parts UPR
- Co octoate (6% solution in xylene) 0,3 parts/100 parts UPR
- N,N-Dimethyl-acetoacetamide 0,4 parts/100 parts UPR

abbreviation: n.det.= not detectable

Example No. 4

The UPRs used in this example are based on the same alkyd as in Example 3.

The behaviour of UPRs in which the monomer is a ternary DAP/styrene/AAEMA mixture, is illustrated.

The results of polymerization tests with UPRs containing only styrene/AAMEA mixtures are also reported for comparison.

All the polymerization reactions are very fast and highly exothermic.

Table No. 4: UPR polymerizations DAP/AAEMA/styrene at 25°C

(alkyd = 55%; vinyl monomers = 45%)

| VINYL MONOMERS | UPR No. 31 | UPR No. 32 | UPR No. 33 | UPR No. 34 | UPR No. 35 | UPR No. 36 | UPR No. 37 | UPR No. 38 | UPR No. 39 | UPR No. 40 | UPR No. 41 | UPR No. 42 | UPR No. 43 |
|---|---|---|---|---|---|---|---|---|---|---|---|---|---|
| DAP (%) | - | 31,2 | 19,4 | 9,0 | - | 27,0 | 15,4 | 6,2 | - | 19,4 | 9,0 | 3,4 | - |
| Styrene (%) | 45 | 3,4 | 6,2 | 9,0 | 11,2 | 9,0 | 14,8 | 19,4 | 22,5 | 19,4 | 27,0 | 31,2 | 33,8 |
| AAEMA (%) | - | 10,4 | 19,4 | 27,0 | 33,8 | 9,0 | 14,8 | 19,4 | 22,5 | 6,2 | 9,0 | 10,4 | 11,2 |
| POLYMERIZATION PARAMETERS | | | | | | | | | | | | | |
| Gel time | 16'50" | 3'40" | 2'17" | 1'50" | 1'27" | 2'20" | 1'35" | 1'15" | 1'14" | 1'32" | 1'29" | 1'23" | 1'15" |
| Polymerization t. | 27'10" | 12'10" | 7'40" | 6'10" | 7' | 7'30" | 5'35" | 5' | 6' | 7'02" | 6'29" | 5'20" | 6'20" |
| Peak temp. (°C) | 191 | 177 | 172 | 160 | 147 | 178 | 173 | 177 | 180 | 182 | 197 | 202 | 208 |
| Delta t. | 10'20" | 8'30" | 5'23" | 4'20" | 5'33" | 5'10" | 4' | 3'45" | 4'46" | 5'30" | 5' | 3'57" | 5'05" |

Polymerization conditions:

- Methyl-ethyl-ketone peroxide (50% solution in di-n-butylphthalate): 1.5 parts/100 parts UPR
- Co-octoate (6% solution in xylene) : 0,3 parts/100 parts UPR
- N,N-Dimethyl-acetoacetamide : 0,4 parts/100 parts UPR

Example No. 5

This example demonstrates that the accelerating effect on the polymerization of the UPRs is common to all compounds in which the structure of acetylacetone or of acetoacetic acid is combined within the same molecule with an ethylenically unsaturated compound.

Table No. 5 contains the polymerization data of UPRs which, together with monomers of the conventional type (styrene, p-Me-styrene, N-vinylpyrrolidone, DAP), contain acetoacetoxy-isopropyl methacrylate (AAPMA) as monomer of the present invention.

To facilitate the comparison, polymerization data of UPRs Nos. 1, 15, 19 and 23 (this last resin is highly underpolymerized, cf. Example 3) are shown in the last columns of Table No. 5.

It should also be said that the DAP-based UPRs in Table 5 have a monomer + accelerating monomer content of 45% and that the alkyd (55%) is that of Example No. 3, whereas the other UPRs have a monomer + accelerating monomer content of 35% and the alkyd (65%) is that from Example No. 1, Table 1a.

Table No. 5: UPR polymerization in conventional monomers or mixtures with conventional monomers/promoters monomers at 25°C.
(UPR Nos 1, 15, 19 and UPR No. 44, 46: alkyd = 65%; monomers = 35%)
(UPRs No. 23 and UPR No. 47: alkyd = 55%; monomers = 45%)

| VINYL MONOMERS | UPR No. 44 | UPR No. 45 | UPR No. 46 | UPR No. 47 | UPR No. 1 | UPR No. 15 | UPR No. 19 | UPR No. 23 |
|---|---|---|---|---|---|---|---|---|
| Styrene (%) | 30,0 | - | - | - | 35,0 | - | - | - |
| p-Me-styrene (%) | - | 30,0 | - | - | - | 35,0 | - | - |
| N-vinyl-pyrrolidone (%) | - | - | 30,0 | - | - | - | 35,0 | - |
| DAP (%) | - | - | | 35,0 | - | - | - | 45,0 |
| AAPMA (%) | 5,0 | 5,0 | 5,0 | 10,0 | - | - | - | - |
| POLYMERIZATION PARAMETERS | | | | | | | | |
| Gel time | 10'30" | 7'30" | 6'25" | 12'10" | 50' | 40'20" | 35'30" | 26'50" |
| Polymerization time | 19'30" | 13'15" | 11' | 21'55" | 69' | 60'50" | 55'40" | 56'50" |
| Peak temperature (°C) | 162 | 163 | 168 | 163 | 155 | 142 | 145 | 46 |
| Delta time | 9' | 5'45" | 4'35" | 9'45" | 19' | 20'30" | 20'10" | 30' |

Annexe to Table No. 5 on the following page

Annexe to Table No. 5

Polymerization conditions (UPRs in DAP):

- Methyl-ethyl-ketone peroxide (50% solution in di-n-butylphthalate: 1,5 parts/100 parts UPR

- Co octoate (6% in xylene): 0,3 parts/100 parts UPR
- N,N-dimethyl-acetoacetamide : 0,4 parts/100 parts UPR

Polymerization conditions (other UPRs):

- methyl-ethyl-ketone peroxide (50% solution in di-n-butylphthalate: 0,8 parts/100 parts UPR
- Co octoate (6% in xylene): 0,3 parts/100 parts UPR

Example No. 6

Some of the UPRs, for which the polymerization parameters at 25 °C have been given in the preceding examples, were polymerized while hot, according to the so-called SPI polymerization test. The polymerisation times are reported in Table No. 6.

The table shows that the crosslinking monomers according to the invention give optimum performance, at least as good as the conventional monomers even in hot polymerizations.

Table No. 6: UPR polymerization in conventional monomers/promoter monomers mixtures at 180°F (82,2°C)
(UPR Nos 23, 24, 47, 40, 43 = alkyd = 55%; monomers = 45%)
(UPR Nos 1, 6, 44: alkyd = 65%; monomers = 35.%)

| VINYL MONOMER | UPR No. 1 | UPR No. 6 | UPR No. 23 | UPR No. 24 | UPR No.47 | UPR No. 40 | UPR No. 43 | UPR No. 44 |
|---|---|---|---|---|---|---|---|---|
| Styrene (%) | 35,0 | - | - | - | - | 19,4 | 33,8 | 30,0 |
| DAP (%) | - | - | 45,0 | 33,8 | 35,0 | 19,4 | - | - |
| AAEMA (%) | - | 35,0 | - | 11,2 | - | 6,2 | 11,2 | - |
| AAPMA (%) | - | - | - | - | 10,0 | - | - | 5,0 |
| POLYMERIZATION PARAMETERS | | | | | | | | |
| Gel time | 8'30" | 7' | 1'26" | 1'29" | 1'25" | 1'34" | 1'26" | 6'15" |
| Polymerization time | 15'45" | 15'40" | 8'21" | 7'57" | 8'10" | 9'08" | 10'16" | 9'25" |
| Peak temperature (°C) | 175 | 145 | 193 | 185 | 188 | 202 | 221 | 187 |
| Delta time | 7'15" | 8'40" | 6'55" | 6'28" | 6'45" | 7'34" | 8'50" | 3'10" |

Polymerization conditions:
- Benzoyl peroxide (50% in di-n-butyl-phthalate: 2,0 parts/100 parts UPR
- Co octoate (6% solution in o-xylene) : 0,3 parts/100 parts UPR

Example No. 7

In this example the physical and mechanical properties of some representative UPRs i.e. UPR No. 1, No. 5, No. 23 and No. 24 are compared.

Table 7a shows these properties determined after 24 hrs polymerization at room temperature and 3 hrs postcuring at 100 °C.

Table 7b shows these properties determined after 24 hrs polymerization at room temperature without postcuring.

The following standard tests were applied:

- tensile strength ASTM D638
- tensile modulus ASTM D638
- flexural stregth ASTM D790
- flexural modulus ASTM D790
- heat deflection temperature HDT, see ASTM D648

If we consider the data on tables No. 7a, 76 and 7c, we see that UPRs containing AAEMA (UPR No. 5 and No. 24) show lower values for elongation at break, in comparison with the similar UPRs not containing AAEMA (UPR No. 1 and No. 23), but higher values for all other parameters. This demonstrates that by using the monomers-accelerators, object of the present invention, is possible to obtain at room temperature a higher degree of crosslinking.

Table No. 7: comparison between mechanical and thermal properties of UPRs cured at 25°C (24 hrs) and cured and postcured (24 hrs at 25°C and 3 hrs at 100°C).

| Table No. 7a: VINYL MONOMERS | UNIT | UPR No. 1 | UPR No. 5 | UPR No. 23 | UPR No. 24 |
|---|---|---|---|---|---|
| Styrene | % | 35 | 25,0 | - | - |
| AAEMA | % | - | 10,0 | - | 11,2 |
| DAP | % | - | - | 45 | 33,8 |
| Treatment: CURING + POSTCURING | | | Curing : 24 hrs at 25°C<br>Postcuring: 3 hrs at 100°C | | |
| | | UPR No. 1 | UPR No. 5 | UPR No. 23 | UPR No. 24 |
| Tensile strength | MPa | 79 | 74 | 53 | 56 |
| Tensile modulus | MPa | 3840 | 3540 | 3560 | 3080 |
| Elongation at break | % | 2,7 | 3,4 | 1,8 | 2,8 |
| Flexural strength | MPa | 150 | 141 | 128 | 124 |
| Flexural modulus | MPa | 4150 | 3860 | 4130 | 3370 |
| Heat deflection temperature | °C | 64 | 49 | 64 | 50 |

Polymerization conditions:
UPRs No. 1 and No. 5: see table 1a
UPRs No. 23 and No. 24: see table 3

Table No. 7: comparison between mechanical and thermal properties of UPRs cured at 25°C (24 hrs) and cured and postcured (24 hrs at 25°C and 3 hrs at 100°C)

| Table No. 7b: VINYL MONOMERS | UNIT | UPR No. 1 | UPR No. 5 | UPR No. 23 | UPR No. 24 |
|---|---|---|---|---|---|
| Styrene | % | 35 | 25,0 | - | - |
| AAEMA | % | - | 10,0 | - | 11,2 |
| DAP | % | - | - | 45 | 33,8 |
| Treatment: CURING | | Curing : 24 hrs at 25°C<br>Postcuring: none | | | |
| | | UPR No. 1 | UPR No. 5 | UPR No. 23 | UPR No. 24 |
| Tensile strength | MPa | 48 | 55 | 15 | 27 |
| Tensile modulus | MPa | 2440 | 2680 | 700 | 1520 |
| Elongation at break | % | 12,7 | 9,3 | 11,1 | 12,2 |
| Flexural strength | MPa | 85 | 91 | not det. | 60 |
| Flexural modulus | MPa | 2060 | 2250 | not det. | 1520 |
| Heat deflection temperature | °C | 40 | 36 | not det. | 32 |

Polymerization conditions:

- UPRs No. 1 and No. 5: see table 1a
- UPRs No. 23 and No. 24: see table 3

Note: not det. = not detectable (because too low)

Table No. 7: comparison between mechanical and thermal properties of UPRs cured at 25°C (24 hrs) and cured and postcrued (24 hrs at 25°C and 3 hrs at 100°C)

| Table No. 7c: VINYL MONOMERS | UNIT | UPR No. 1 | UPR No. 5 | UPR No. 23 | UPR No. 24 |
|---|---|---|---|---|---|
| Styrene | % | 35 | 25,0 | - | - |
| AAEMA | % | - | 10,0 | - | 11,2 |
| DAP | % | - | - | 45 | 33,8 |

| Ratio between the values of table No. 7 b and values of table No. 7a | Ratio UPR No. 1 | UPR No. 5 | UPR No. 23 | UPR No. 24 |
|---|---|---|---|---|
| Tensile strength | 0,61 | 0,74 | 0,28 | 0,48 |
| Tensile modulus | 0,64 | 0,76 | 0,20 | 0,49 |
| Elongation at break | 4,70 | 2,74 | 6,17 | 4,36 |
| Flexural strength | 0,57 | 0,65 | - | 0,48 |
| Flexural modulus | 0,50 | 0,58 | - | 0,45 |
| Heat deflection temperature | 0,63 | 0,73 | - | 0,64 |

Polymerization conditions:

- UPRs No. 1 and No. 5: see table 1a
- UPRs No. 23 and No. 24: see table 3

## Claims

**Claims for the following Contracting States : AT, BE, CH, DE, DK, FR, GB, IT, LI, LU, NL, SE**

**1.** Unsaturated polyester resin composition, comprising at least one unsaturated polyester resin and 10 to 60% by weight, relative to said composition, of one or more crosslinking monomers, characterized in that said crosslinking monomers comprise at least one compound of the formula (I)

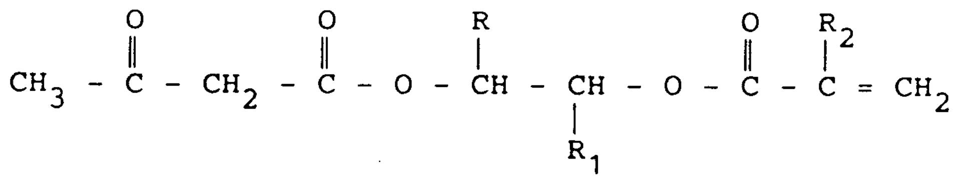

where R, $R_1$ and $R_2$ are H or a methyl group.

**2.** Composition according to Claim 1, wherein said compound of the formula (I) is selected from acetoacetoxy-ethyl methacrylate and acetoacetoxy-isopropylmethyacrylate.

**3.** Composition according to Claim 1 or 2, wherein said compound of formula (I) is acetoacetoxy-ethyl methacrylate.

**4.** Composition according to any of Claims 1 to 3, containing at least one said compound of the formula (I) in a concentration from 0,1 to 59% by weight and containing at least one further monomer selected from vinyl monomers, allyl ester monomers, where said at least one further monomer is present in a concentration from 1 to 59,9% by weight, the total concentration of crosslinking monomer(s) being 10-60 % by weight of the unsaturated polyester resin composition.

**5.** Composition according to Claim 4, wherein said further monomer is selected from styrene, p-methyl-styrene, tetrachloroethylene, N-vinylpyrrolidone, vinyl-toluene, diallyl phthalate and prepolymers thereof, and mixtures thereof.

**6.** Composition according to Claim 4 or 5, wherein said further monomer is styrene.

**7.** Composition according to Claim 4 or 5, wherein said further monomer is diallylphthalate.

**8.** Composition according to any of Claims 1 to 7, wherein said at least one unsaturated polyester resin is selected from polyesters obtained by the reaction of at least one monomeric or polymeric glycol with at least one ethylenically $\alpha,\beta$-unsaturated dicarboxylic acid or an anhydride thereof.

**9.** Composition according to Claim 8, wherein said unsaturated polyester resin is obtained by the reaction of a said glycol with a said ethylenically unsaturated dicarboxylic acid mixed with at least one saturated dicarboxylic acid.

**10.** Composition according to Claim 8 or 9, wherein said ethylenically unsaturated acid is selected from maleic acid, fumaric acid, citraconic acid, itaconic acid, mesaconic acid, anhydrides thereof (if existing) and mixtures thereof.

**11.** Composition according to any of Claims 1 to 10, containing a free-radical polymerization catalyst in a quantity of 0,1 to 3 parts by weight per 100 parts by weight of unsaturated polyester resin.

**12.** Composition according to any of Claims 1 to 11, additionally containing a curing accelerator selected from salts of cobalt, manganese, vanadium and iron, $\beta$-diketones and tertiary aromatic amines, said accelerator being present in a concentration of 0,05 to 1 part per 100 parts of unsaturated polyester resin.

**13.** Composition according to any of the preceding claims, crosslinkable at a temperature of between ambient temperature and 180 ° C.

**14.** Process for preparing crosslinked unsaturated polyester resin compositions from the compositions according to any of claims 1 to 13 by crosslinking a polycondensate of a least one monomeric or polymeric glycol with at least one ethylenically $\alpha,\beta$-unsaturated dicarboxylic acid or an anhydride thereof with at least one crosslinking monomer characterized in that said crosslinking monomers comprise at least one compound of the formula (I)

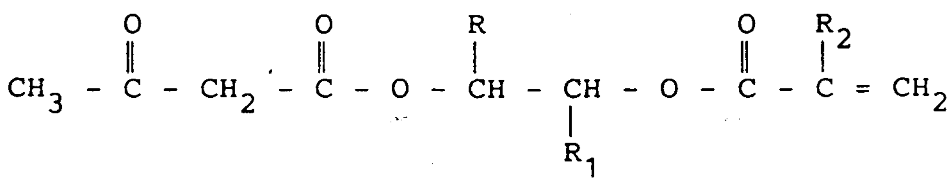

wherein R, $R_1$ and $R_2$ are H or a methyl group.

**15.** Process according to Claim 14, characterized in that said compound of the formula (I) is selected from acetoacetoxyethyl methacrylate and acetoacetoxy-isopropylmethacrylate.

**16.** Process according to Claim 14 or 15, characterized in that said compound of formula (I) is acetoacetoxy-ethyl methacrylate.

**17.** Process according to any of Claims 14 to 16, characterized in that at least one said compound of the formula (I) is present in a concentration from 0,1 to 59% by weight and at least one further monomer selected from vinyl monomers, allyl ester monomers, where said at least one further monomer is present in a concentration from 1 to 59,9% by weight.

**18.** Process according to Claim 17, characterized in that said further monomer is selected from styrene, p-methylstyrene, tetrachloroethylene, N-vinylpyrrolidone, vinyltoluene, diallyl phthalate and prepolymers thereof, and mixtures thereof.

**19.** Process according to Claim 17 or 18, characterized in that said further monomer is styrene.

**20.** Process according to Claim 17 or 18, characterized in that said further monomer is diallylphthalate.

**21.** Process according to Claim 14, characterized in that said ethylenically $\alpha,\beta$-unsaturated acid is selected from maleic acid, fumaric acid, citraconic acid, itaconic acid, mesaconic acid, anhydrides thereof (if existing) and mixtures thereof.

**22.** Process according to any of Claims 14 to 15, characterized in that a free-radical polymerization catalyst is present in a quantity of 0,1 to 3 parts by weight per 100 parts by weight of unsaturated polyester resin.

**23.** Process according to any of Claims 14 to 22, characterized in that additionally a curing accelerator selected from salts of cobalt, manganese, vanadium and iron, $\beta$-diketones and tertiary aromatic amines, said accelerator being present in a concentration of 0,05 to 1 part per 100 parts of unsaturated polyester resin.

**24.** Process according to any of the preceding claims, characterized in that the crosslinking is effected at a temperature of between ambient temperature and 180 ° C.

**Claims for the following Contracting State : ES**

**1.** Unsaturated polyester resin composition, comprising at least one unsaturated polyester resin and 10 to 60% by weight, relative to said composition, of one or more crosslinking monomers, characterized in

that said crosslinking monomers comprise at least one compound of the formula (I)

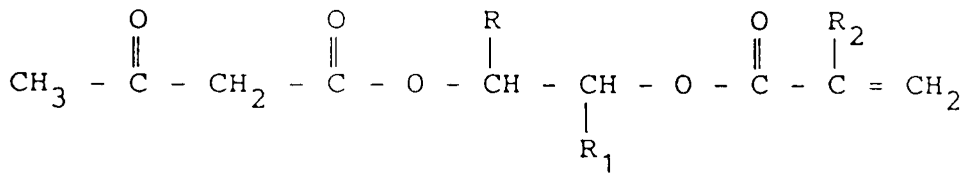

where R, $R_1$ and $R_2$ are H or a methyl group.

**2.** Composition according to Claim 1, wherein said compound of the formula (I) is selected from acetoacetoxy-ethyl methacrylate and acetoacetoxy-isopropylmethyacrylate.

**3.** Composition according to Claim 1 or 2, wherein said compound of formula (I) is acetoacetoxy-ethyl methacrylate.

**4.** Composition according to any of Claims 1 to 3, containing at least one said compound of the formula (I) in a concentration from 0,1 to 59% by weight and containing at least one further monomer selected from vinyl monomers, allyl ester monomers, where said at least one further monomer is present in a concentration from 1 to 59,9% by weight, the total concentration of crosslinking monomer(s) being 10-60 % by weight of the unsaturated polyester resin composition.

**5.** Composition according to Claim 4, wherein said further monomer is selected from styrene, p-methyl-styrene, tetrachloroethylene, N-vinylpyrrolidone, vinyl-toluene, diallyl phthalate and prepolymers thereof, and mixtures thereof.

**6.** Composition according to Claim 4 or 5, wherein said further monomer is styrene.

**7.** Composition according to Claim 4 or 5, wherein said further monomer is diallylphthalate.

**8.** Composition according to any of Claims 1 to 7, wherein said at least one unsaturated polyester resin is selected from polyesters obtained by the reaction of at least one monomeric or polymeric glycol with at least one ethylenically $\alpha,\beta$-unsaturated dicarboxylic acid or an anhydride thereof.

**9.** Composition according to Claim 8, wherein said unsaturated polyester resin is obtained by the reaction of a said glycol with a said ethylenically unsaturated dicarboxylic acid mixed with at least one saturated dicarboxylic acid.

**10.** Composition according to Claim 8 or 9, wherein said ethylenically unsaturated acid is selected from maleic acid, fumaric acid, citraconic acid, itaconic acid, mesaconic acid, anhydrides thereof (if existing) and mixtures thereof.

**11.** Composition according to any of Claims 1 to 10, containing a free-radical polymerisation catalyst in a quantity of 0,1 to 3 parts by weight per 100 parts by weight of unsaturated polyester resin.

**12.** Composition according to any of Claims 1 to 11, additionally containing a curing accelerator selected from salts of cobalt, manganese, vanadium and iron, $\beta$-diketones and tertiary aromatic amines, said accelerator being present in a concentration of 0,05 to 1 part per 100 parts of unsaturated polyester resin.

**13.** Composition according to any of the preceding claims, crosslinkable at a temperature of between ambient temperature and 180 °C.

**14.** Process for preparing crosslinked unsaturated polyester resin compositions from an unsaturated polyester resin composition, comprising at least one unsaturated polyester resin and 10 to 60% by weight, relative to said composition, of one or more crosslinking monomers, by crosslinking a

polycondensate of at least one monomeric or polymeric glycol with at least one ethylenically α,β-unsaturated dicarboxylic acid or an anhydride thereof with at least one crosslinking monomer characterized in that said crosslinking monomers comprise at least one compound of the formula (I)

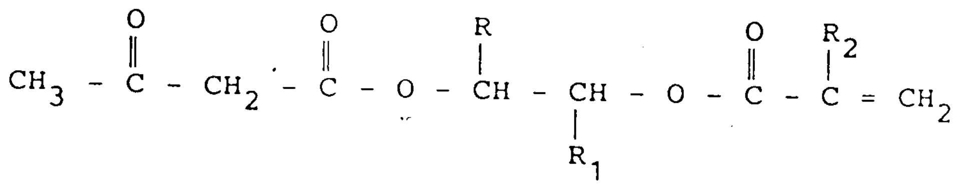

wherein R, $R_1$ and $R_2$ are H or a methyl group.

**15.** Process according to Claim 14, characterized in that said compound of the formula (I) is selected from acetoacetoxy-ethyl methacrylate and acetoacetoxy-isopropylmethacrylate.

**16.** Process according to Claim 14 or 15, characterized in that said compound of formula (I) is acetoacetoxy-ethyl methacrylate.

**17.** Process according to any of Claims 14 to 16, characterized in that at least one said compound of the formula (I) is present in a concentration from 0,1 to 59% by weight and at least one further monomer selected from vinyl monomers, allyl ester monomers, where said at least one further monomer is present in a concentration from 1 to 59,9% by weight.

**18.** Process according to Claim 17, characterized in that said further monomer is selected from styrene, p-methyl-styrene, tetrachloroethylene, N-vinylpyrrolidone, vinyl-toluene, diallyl phthalate and prepolymers thereof, and mixtures thereof.

**19.** Process according to Claim 17 or 18, characterized in that said further monomer is styrene.

**20.** Process according to Claim 17 or 18, characterized in that said further monomer is diallylphthalate.

**21.** Process according to Claim 14, characterized in that said ethylenically α,β-unsaturated acid is selected from maleic acid, fumaric acid, citraconic acid, itaconic acid, mesaconic acid, anhydrides thereof (if existing) and mixtures thereof.

**22.** Process according to any of Claims 14 to 15, characterized in that a free-radical polymerization catalyst is present in a quantity of 0,1 to 3 parts by weight per 100 parts by weight of unsaturated polyester resin.

**23.** Process according to any of Claims 14 to 22, characterized in that additionally a curing accelerator selected from salts of cobalt, manganese, vanadium and iron, β-diketones and tertiary aromatic amines, said accelerator being present in a concentration of 0,05 to 1 part per 100 parts of unsaturated polyester resin.

**24.** Process according to any of the preceding claims, characterized in that the crosslinking is effected at a temperature of between ambient temperature and 180 °C.

**Patentansprüche**

**Patentansprüche für folgende Vertragsstaaten : AT, BE, CH, DE, DK, FR, GB, IT, LI, LU, NL, SE**

**1.** Ungesättigte Polyesterharz-Zusammensetzung, die wenigstens ein ungesättigtes Polyesterharz und 10 bis 60 Gew.-%, bezogen auf die genannte Zusammensetzung, eines oder mehrerer vernetzender Monomere umfaßt, dadurch gekennzeichnet, daß die vernetzenden Monomere wenigstens eine Verbindung der Formel (I)

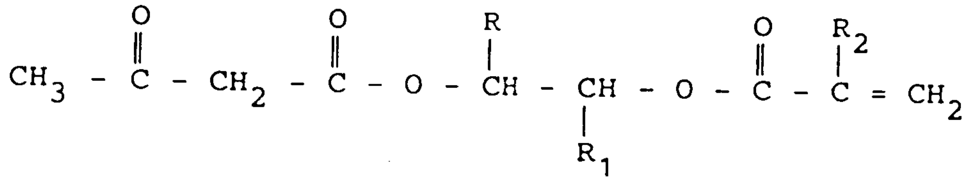

umfaßt, worin R, $R_1$ und $R_2$ = H oder eine Methylgruppe bedeuten.

**2.** Zusammensetzung nach Anspruch 1, worin die genannte Verbindung der Formel (I) ausgewählt wird aus Acetoacetoxy-ethylmethacrylat und Acetoacetoxy-isopropylmethacrylat.

**3.** Zusammensetzung nach Anspruch 1 oder 2, worin die genannte Verbindung der Formel (I) Acetoacetoxy-ethylmethacrylat ist.

**4.** Zusammensetzung nach einem der Ansprüche 1 bis 3, die wenigstens eine Verbindung der Formel (I) in einer Konzentration von 0,1 bis 59 Gew.-% und wenigstens ein weiteres Monomer enthält, ausgewählt aus Vinylmonomeren, Allylestermonomeren, wobei das genannte wenigstens eine weitere Monomer in einer Konzentration von 1 bis 59,9 Gew.-% anwesend ist, und die gesamte Konzentration an vernetzendem(n) Monomer(en) 10-60 Gew.-% der ungesättigten Polyesterharz-Zusammensetzung beträgt.

**5.** Zusammensetzung nach Anspruch 4, worin das genannte weitere Monomer ausgewählt wird aus Styrol, p-Methylstyrol, Tetrachlorethylen, N-Vinylpyrrolidon, Vinyltoluol, Diallylphthalat und Prepolymeren von diesen und Mischungen von diesen.

**6.** Zusammensetzung nach Anspruch 4 oder 5, worin das genannte weitere Monomer Styrol ist.

**7.** Zusammensetzung nach Anspruch 4 oder 5, worin das genannte weitere Monomer Diallylphthalat ist.

**8.** Zusammensetzung nach einem der Ansprüche 1 bis 7, worin das genannte wenigstens eine ungesättigte Polyesterharz ausgewählt wird aus Polyestern, erhalten durch Umsetzung wenigstens eines monomeren oder polymeren Glykols mit wenigstens einer ethylenisch $\alpha,\beta$-ungesättigen Dicarbonsäure oder einem Anhydrid davon.

**9.** Zusammensetzung nach Anspruch 8, worin das genannte ungesättigte Polyesterharz erhalten wird durch Umsetzung eines genannten Glykols mit einer genannten ethylenisch ungesättigten Dicarbonsäure, gemischt mit wenigstens einer gesättigten Dicarbonsäure.

**10.** Zusammensetzung nach Anspruch 8 oder 9, worin die genannte ethylenisch ungesättigte Säure ausgewählt wird aus Maleinsäure, Fumarsäure, Citraconsäure, Itaconsäure, Mesaconsäure, Anhydriden davon (sofern existent) und Mischungen von diesen.

**11.** Zusammensetzung nach einem der Ansprüche 1 bis 10, die einen Polymerisationskatalysator auf der Basis freier Radikale in einer Menge von 0,1 bis 3 Gew.-Teilen pro 100 Gew.-Teile des ungesättigten Polyesterharzes enthält.

**12.** Zusammensetzung nach einem der Ansprüche 1 bis 11, die zusätzlich einen Härtungsbeschleuniger, ausgewählt aus Salzen von Kobalt, Mangan, Vanadium und Eisen, $\beta$-Diketonen und aromatischen tertiären Aminen enthält, wobei der genannten Beschleuniger in einer Konzentration von 0,05 bis 1 Teil pro 100 Teile des ungesättigten Polyesterharzes anwesend ist.

**13.** Zusammensetzung nach einem der vorhergehenden Ansprüche, die bei einer Temperatur zwischen Raumtemperatur und 180° C vernetzbar ist.

**14.** Verfahren zur Herstellung vernetzter ungesättigter Polyesterharz-Zusammensetzungen aus den Zusammensetzungen nach einem der Ansprüche 1 bis 13 durch Vernetzen eines Polykondensats wenigstens eines monomeren oder polymeren Glykols mit wenigstens einer ethylenisch $\alpha,\beta$-ungesättigten Dicarbonsäure oder einem Anhyrid von dieser mit wenigstens einem vernetzenden Monomer, dadurch gekennzeichnet, daß die genannten vernetzenden Monomere wenigstens eine Verbindung der Formel (I)

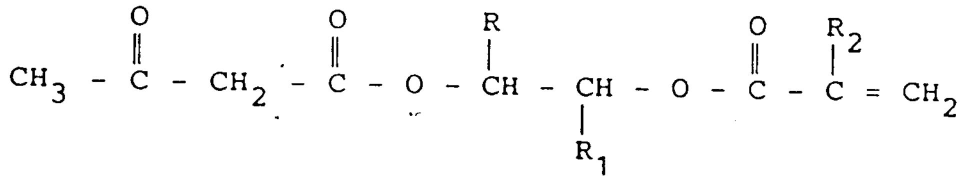

umfassen, worin R, $R_1$ und $R_2$ = H oder eine Methylgruppe bedeuten.

**15.** Verfahren nach Anspruch 14, dadurch gekennzeichnet, daß die Verbindung der Formel (I) ausgewählt wird aus Acetoacetoxyethylmethacrylat und Acetoacetoxy-isopropylmethacrylat.

**16.** Verfahren nach Anspruch 14 oder 15, dadurch gekennzeichnet, daß die genannte Verbindung der Formel (I) Acetoacetoxyethylmethacrylat ist.

**17.** Verfahren nach einem der Ansprüche 14 bis 16, dadurch gekennzeichnet, daß wenigstens eine der genannten Verbindung der Formel (I) in einer Konzentration von 0,1 bis 59 Gew.-% und wenigstens ein weiteres Monomer ausgewählt aus Vinylmonomeren, Allylestermonomeren anwesend ist, wobei das genannte wenigstens eine weitere Monomer in einer Konzentration von 1 bis 59,9 Gew.-% anwesend ist.

**18.** Verfahren nach Anspruch 17, dadurch gekennzeichnet, daß das genannte weitere Monomer ausgewählt wird aus Styrol, p-Methylstyrol, Tetrachlorethylen, N-Vinylpyrrolidon, Vinyltoluol, Diallylphthalat und Prepolymeren von diesen und Mischungen von diesen.

**19.** Verfahren nach Anspruch 17 oder 18, dadurch gekennzeichnet, daß das genannte weitere Monomer Styrol ist.

**20.** Verfahren nach Anspruch 17 oder 18, dadurch gekennzeichnet, daß das genannte weitere Monomer Diallylphthalat ist.

**21.** Verfahren nach Anspruch 14, dadurch gekenzeichnet, daß die ethylenisch $\alpha,\beta$-ungesättigte Säure ausgewählt wird aus Maleinsäure, Fumarsäure, Citraconsäure, Itaconsäure, Mesaconsäure, Anhydriden davon (sofern existent) und Mischungen von diesen.

**22.** Verfahren nach einem der Ansprüche 14 bis 15, dadurch gekennzeichnet, daß ein Polymerisationskatalysator auf der Basis freier Radikale in einer Menge von 0,1 bis 3 Gew.-Teilen pro 100 Gew.-Teile des ungesättigten Polyesterharzes anwesend ist.

**23.** Verfahren nach einem der Ansprüche 14 bis 22, dadurch gekennzeichnet, daß zusätzlich ein Härtungsbeschleuniger, ausgewählt aus Salzen von Kobalt, Mangan, Vanadium und Eisen, $\beta$-Diketonen und tert. aromatischen Aminen anwesend ist, wobei der genannten Beschleuniger in einer Konzentration von 0,05 bis 1 Teil pro 100 Teile des ungesättigten Polyesterharzes vorliegt.

**24.** Verfahren nach einem der vorhergehenden Ansprüche, dadurch gekennzeichnet, daß das Vernetzen bei einer Temperatur zwischen Raumtemperatur und 180° C durchgeführt wird.

**Patentansprüche für folgenden Vertragsstaat : ES**

1. Ungesättigte Polyesterharz-Zusammensetzung, die wenigstens ein ungesättigtes Polyesterharz und 10 bis 60 Gew.-%, bezogen auf die genannte Zusammensetzung, eines oder mehrerer vernetzender Monomere umfaßt, dadurch gekennzeichnet, daß die vernetzenden Monomere wenigstens eine Verbindung der Formel (I)

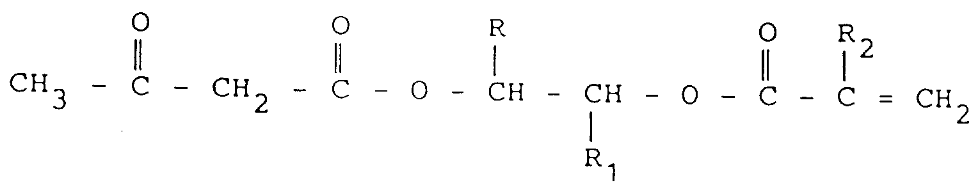

umfaßt, worin R, $R_1$ und $R_2$ = H oder eine Methylgruppe bedeuten.

2. Zusammensetzung nach Anspruch 1, worin die genannte Verbindung der Formel (I) ausgewählt wird aus Acetoacetoxy-ethylmethacrylat und Acetoacetoxy-isopropylmethacrylat.

3. Zusammensetzung nach Anspruch 1 oder 2, worin die genannte Verbindung der Formel (I) Acetoacetoxy-ethylmethacrylat ist.

4. Zusammensetzung nach einem der Ansprüche 1 bis 3, die wenigstens eine Verbindung der Formel (I) in einer Konzentration von 0,1 bis 59 Gew.-% und wenigstens ein weiteres Monomer enthält, ausgewählt aus Vinylmonomeren, Allylestermonomeren, wobei das genannte wenigstens eine weitere Monomer in einer Konzentration von 1 bis 59,9 Gew.-% anwesend ist, und die gesamte Konzentration an vernetzendem(n) Monomer(en) 10-60 Gew.-% der ungesättigten Polyesterharz-Zusammensetzung beträgt.

5. Zusammensetzung nach Anspruch 4, worin das genannte weitere Monomer ausgewählt wird aus Styrol, p-Methylstyrol, Tetrachlorethylen, N-Vinylpyrrolidon, Vinyltoluol, Diallylphthalat und Prepolymeren von diesen und Mischungen von diesen.

6. Zusammensetzung nach Anspruch 4 oder 5, worin das genannte weitere Monomer Styrol ist.

7. Zusammensetzung nach Anspruch 4 oder 5, worin das genannte weitere Monomer Diallylphthalat ist.

8. Zusammensetzung nach einem der Ansprüche 1 bis 7, worin das genannte wenigstens eine ungesättigte Polyesterharz ausgewählt wird aus Polyestern, erhalten durch Umsetzung wenigstens eines monomeren oder polymeren Glykols mit wenigstens einer ethylenisch $\alpha,\beta$-ungesättigen Dicarbonsäure oder einem Anhydrid davon.

9. Zusammensetzung nach Anspruch 8, worin das genannte ungesättigte Polyesterharz erhalten wird durch Umsetzung eines genannten Glykols mit einer genannten ethylenisch ungesättigten Dicarbonsäure, gemischt mit wenigstens einer gesättigten Dicarbonsäure.

10. Zusammensetzung nach Anspruch 8 oder 9, worin die genannte ethylenisch ungesättigte Säure ausgewählt wird aus Maleinsäure, Fumarsäure, Citraconsäure, Itaconsäure, Mesaconsäure, Anhydriden davon (sofern existent) und Mischungen von diesen.

11. Zusammensetzung nach einem der Ansprüche 1 bis 10, die einen Polymerisationskatalysator auf der Basis freier Radikale in einer Menge von 0,1 bis 3 Gew.-Teilen pro 100 Gew.-Teile des ungesättigten Polyesterharzes enthält.

12. Zusammensetzung nach einem der Ansprüche 1 bis 11, die zusätzlich einen Härtungsbeschleuniger, ausgewählt aus Salzen von Kobalt, Mangan, Vanadium und Eisen, $\beta$-Diketonen und tert. aromatischen Aminen enthält, wobei der genannten Beschleuniger in einer Konzentration von 0,05 bis 1 Teil pro 100

Teile des ungesättigten Polyesterharzes anwesend ist.

**13.** Zusammensetzung nach einem der vorhergehenden Ansprüche, die bei einer Temperatur zwischen Raumtemperatur und 180 ° C vernetzbar ist.

**14.** Verfahren zur Herstellung vernetzter ungesättigter Polyesterharz-Zusammensetzungen aus einer ungesättigten Polyesterharz-Zusammensetzung, die wenigstens ein ungesättigtes Polyesterharz und 10 bis 60 Gew.-%, bezogen auf die genannte Zusammensetzung, eines oder mehrerer vernetzender Monomere umfaßt, durch Vernetzen eines Polykondensats wenigstens eines monomeren oder polymeren Glykols mit wenigstens einer ethylenisch $\alpha,\beta$-ungesättigten Dicarbonsäure oder einem Anhyrid von dieser mit wenigstens einem vernetzenden Monomer, dadurch gekennzeichnet, daß die genannten vernetzenden Monomere wenigstens eine Verbindung der Formel (I)

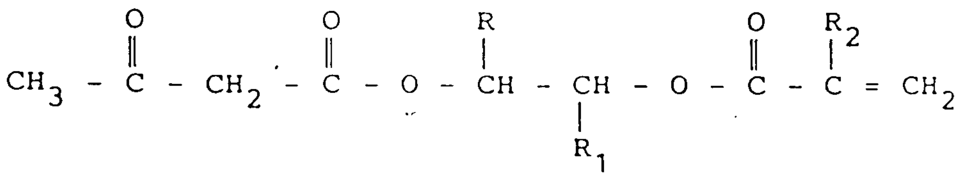

umfassen, worin R, $R_1$ und $R_2$ = H oder eine Methylgruppe bedeuten.

**15.** Verfahren nach Anspruch 14, dadurch gekennzeichnet, daß die Verbindung der Formel (I) ausgewählt wird aus Acetoacetoxyethylmethacrylat und Acetoacetoxy-isopropylmethacrylat.

**16.** Verfahren nach Anspruch 14 oder 15, dadurch gekennzeichnet, daß die genannte Verbindung der Formel (I) Acetoacetoxyethylmethacrylat ist.

**17.** Verfahren nach einem der Ansprüche 14 bis 16, dadurch gekennzeichnet, daß wenigstens eine der genannten Verbindung der Formel (I) in einer Konzentration von 0,1 bis 59 Gew.-% und wenigstens ein weiteres Monomer ausgewählt aus Vinylmonomeren, Allylestermonomeren anwesend ist, wobei das genannte wenigstens eine weitere Monomer in einer Konzentration von 1 bis 59,9 Gew.-% anwesend ist.

**18.** Verfahren nach Anspruch 17, dadurch gekennzeichnet, daß das genannte weitere Monomer ausgewählt wird aus Styrol, p-Methylstyrol, Tetrachlorethylen, N-Vinylpyrrolidon, Vinyltoluol, Diallylphthalat und Prepolymeren von diesen und Mischungen von diesen.

**19.** Verfahren nach Anspruch 17 oder 18, dadurch gekennzeichnet, daß das genannte weitere Monomer Styrol ist.

**20.** Verfahren nach Anspruch 17 oder 18, dadurch gekennzeichnet, daß das genannte weitere Monomer Diallylphthalat ist.

**21.** Verfahren nach Anspruch 14, dadurch gekennzeichnet, daß die ethylenisch $\alpha,\beta$-ungesättigte Säure ausgewählt wird aus Maleinsäure, Fumarsäure, Citraconsäure, Itaconsäure, Mesaconsäure, Anhydriden davon (sofern existent) und Mischungen von diesen.

**22.** Verfahren nach einem der Ansprüche 14 bis 15, dadurch gekennzeichnet, daß ein Polymerisationskatalysator auf der Basis freier Radikale in einer Menge von 0,1 bis 3 Gew.-Teilen pro 100 Gew.-Teile des ungesättigten Polyesterharzes anwesend ist.

**23.** Verfahren nach einem der Ansprüche 14 bis 22, dadurch gekennzeichnet, daß zusätzlich ein Härtungsbeschleuniger, ausgewählt aus Salzen von Kobalt, Mangan, Vanadium und Eisen, $\beta$-Diketonen und aromatischen tertiären Aminen anwesend ist, wobei der genannten Beschleuniger in einer Konzentration von 0,05 bis 1 Teil pro 100 Teile des ungesättigten Polyesterharzes vorliegt.

**24.** Verfahren nach einem der vorhergehenden Ansprüche, dadurch gekennzeichnet, daß das Vernetzen bei einer Temperatur zwischen Raumtemperatur und 180° C durchgeführt wird.

**Revendications**

**Revendications pour les Etats contractants suivants : AT, BE, CH, DE, DK, FR, GB, IT, LI, LU, NL, SE**

**1.** Composition de résines de polyesters insaturés, comprenant au moins une résine de polyester insaturé et 10 à 60 % en poids, par rapport à la composition, d'un ou de plusieurs monomères réticulants, caractérisée en ce que les monomères réticulants comprennent au moins un composé de la formule (I)

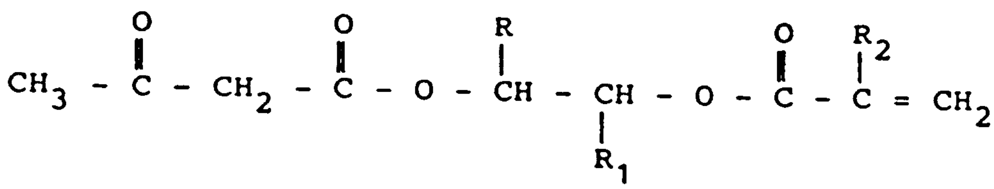

dans laquelle R, $R_1$ et $R_2$ sont H ou un groupe méthyle.

**2.** Composition selon la revendication 1, dans laquelle le composé de la formule (I) est choisi parmi l'acétoacétoxy-éthylméthacrylate et l'acétoacétoxy-isopropylméthacrylate.

**3.** Composition selon la revendication 1 ou 2, dans laquelle le compose de la formule (I) est l'acétoacétoxy-éthylméthacrylate.

**4.** Composition selon l'une quelconque des revendications 1 à 3, contenant au moins un composé de la formule (I) dans une concentration de 0,1 à 59 % en poids et contenant au moins un monomère supplémentaire choisi parmi les monomères de vinyle, les monomères d'ester d'allyle, ou au moins un monomère supplémentaire et présent dans une concentration de 1 à 59,9 % en poids, la concentration totale du (ou des) monomère(s) réticulant(s) étant de 10-60% en poids de la composition de résine de polyester insaturé.

**5.** Composition selon la revendication 4, dans laquelle le monomère supplémentaire est choisi parmi le styrène, le p-méthyl-styrène, le tétrachloréthylène, la N-vinylpyrrolidone, le vinyl-toluène, le phtalate de diallyle et leurs prépolymères et leurs mélanges.

**6.** Composition selon la revendication 4 ou 5, dans laquelle le monomère supplémentaire est le styrène.

**7.** Composition selon la revendication 4 ou 5, dans laquelle le monomère supplémentaire est le diallylphtalate.

**8.** Composition selon l'une quelconque des revendications 1 à 7, dans laquelle au moins une résine de polyester insaturé est choisie parmi les polyesters obtenus par la réaction d'au moins un glycol monomère ou polymère avec au moins un acide dicarboxylique éthyléniquement $\alpha$, $\beta$-insaturé ou son anhydride.

**9.** Composition selon la revendication 8, dans laquelle la résine de polyester insaturé est obtenue par la réaction d'un glycol avec un acide dicarboxylique éthyléniquement insaturé mélangé avec au moins un acide dicarboxylique saturé.

**10.** Composition selon la revendication 8 ou 9, dans laquelle l'acide insaturé éthyléniquement est choisi parmi l'acide maléique, l'acide fumarique, l'acide citraconique, l'acide itaconique, l'acide mésaconique, leurs anhydrides (le cas échéant) et leurs mélanges.

**11.** Composition selon l'une quelconque des revendications 1 à 10, contenant un catalyseur de polymérisation radical libre dans une quantité de 0,1 à 3 parties en poids pour 100 parties en poids de la résine

de polyester insaturé.

**12.** Composition selon l'une quelconque des revendications 1 à 11, contenant de plus un accélérateur de durcissement choisi parmi les sels de cobalt, manganèse, vanadium et fer, les $\beta$-dicétones et les amines aromatiques tertiaires, cet accélérateur étant présent dans une concentration de 0,05 à 1 partie pour 100 parties de résine de polyester insaturé.

**13.** Composition selon l'une quelconque des revendications précédentes, réticulable à une température entre la température ambiante et 180 ° C.

**14.** Procédé pour la préparation de compositions de résines de polyesters insaturés, réticulés à partir des compositions selon l'une quelconque des revendications 1 à 13, par réticulation d'un polycondensat d'au moins un glycol monomère ou polymère avec au moins un acide dicarboxylique éthyléniquement $\alpha$, $\beta$-insaturé ou son anhydride avec au moins un monomère réticulant, caractérisé en ce que les monomères réticulants comprennent au moins un composé de la formule (I)

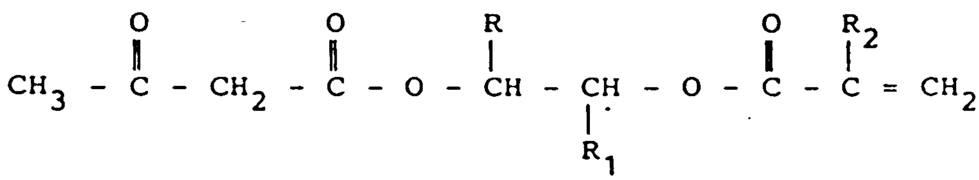

dans laquelle R, $R_1$ et $R_2$ sont H ou un groupe méthyle.

**15.** Procédé selon la revendication 14, caractérisé en ce que le composé de la formule (I) est choisi parmi l'acétoacétoxy-éthylméthacrylate et l'acétoacétoxy-isopropylméthacrylate.

**16.** Procédé selon la revendication 14 ou 15, caractérisé en ce que le composé de la formule (I) est l'acétoacétoxy-éthylméthacrylate.

**17.** Procédé selon l'une quelconque des revendications 14 à 16, caractérisé en ce qu'au moins un composé de la formule (I) est présent dans une concentration de 0,1 à 59 % en poids et au moins un monomère supplémentaire choisi à partir des monoméres de vinyle, des monomères d'ester d'allyle, ou au moins un monomère supplémentaire et présent dans une concentration de 1 à 59,9 % en poids.

**18.** Procédé selon la revendication 17, caractérisé en ce que le monomère supplémentaire est choisi parmi le styrène, le p-méthyl-styrène, le tétrachloréthyléne, la N-vinylpyrrolidone, le vinyl-toluène, le diallylphtalate et leurs prépolymères et leurs mélanges.

**19.** Procédé selon la revendication 17 ou 18, caractérisé en ce que le monomère supplémentaire est le styrène.

**20.** Procédé selon la revendication 17 ou 18, caractérisé en ce que le monomère supplémentaire est le diallylphtalate.

**21.** Procédé selon la revendication 14, caractérisé en ce que l'acide $\alpha$, $\beta$-insaturé éthyléniquement est choisi parmi l'acide maléique, l'acide fumarique, l'acide citraconique, l'acide itaconique, l'acide mésaconique, leurs anhydrides (le cas échéant) et leurs mélanges.

**22.** Procédé selon l'une quelconque des revendications 14 à 15, caractérisé en ce qu'un catalyseur de polymérisation à radicaux libres est présent dans une quantité de 0,1 à 3 parties en poids pour 100 parties en poids de la résine de polyester insaturé.

**23.** Procédé selon l'une quelconque des revendications 14 à 22, caractérisé en l'addition d'un accélérateur de durcissement choisi parmi les sels de cobalt, de manganèse, de vanadium et de fer, de $\beta$-dicétones et d'amines aromatiques tertiaires, cet accélérateur étant présent dans une concentration de 0,05 à 1

partie pour 100 parties de résine de polyester insaturé.

**24.** Procédé selon l'une quelconque des revendications précédentes, caractérisé en ce que la réticulation s'effectue à une température entre la température ambiante et 180 ° C.

**Revendications pour l'Etat contractant suivant : ES**

**1.** Composition de résines de polyesters insaturés, comprenant au moins une résine de polyester insaturé et 10 à 60 % en poids, par rapport à la composition, d'un ou de plusieurs monomères réticulants, caractérisée en ce que les monomères réticulants comprennent au moins un composé de la formule (I)

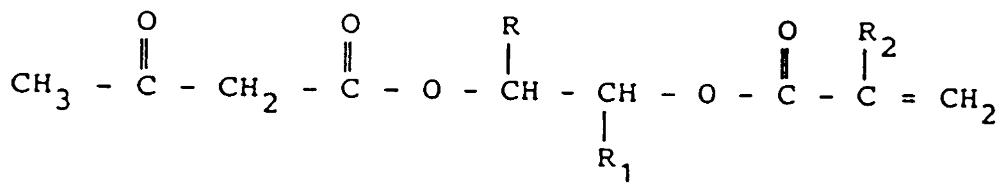

dans laquelle R, $R_1$ et $R_2$ sont H ou un groupe méthyle.

**2.** Composition selon la revendication 1, dans laquelle le composé de la formule (I) est choisi parmi l'acétoacétoxy-éthylméthacrylate et l'acétoacétoxy-isopropylméthacrylate.

**3.** Composition selon la revendication 1 ou 2, dans laquelle le composé de la formule (I) est l'acétoacétoxy-éthylméthacrylate.

**4.** Composition selon l'une quelconque des revendications 1 à 3, contenant au moins un composé de la formule (I) dans une concentration de 0,1 à 59 % en poids et contenant au moins un monomère supplémentaire choisi parmi les monomères de vinyle, les monomères d'ester d'allyle, ou au moins un monomère supplémentaire et présent dans une concentration de 1 à 59,9 % en poids, la concentration totale du (ou des) monomère(s) réticulant(s) étant de 10-60% en poids de la composition de résine de polyester insaturé.

**5.** Composition selon la revendication 4, dans laquelle le monomère supplémentaire est choisi parmi le styrène, le p-méthyl-styrène, le tétrachloréthylène, la N-vinylpyrrolidone, le vinyl-toluène, le phtalate de diallyle et leurs prépolymères et leurs mélanges.

**6.** Composition selon la revendication 4 ou 5, dans laquelle le monomère supplémentaire est le styrène.

**7.** Composition selon la revendication 4 ou 5, dans laquelle le monomère supplémentaire est le diallylphtalate.

**8.** Composition selon l'une quelconque des revendications 1 à 7, dans laquelle au moins une résine de polyester insaturé est choisie parmi les polyesters obtenus par la réaction d'au moins un glycol monomère ou polymère avec au moins un acide dicarboxylique éthyléniquement $\alpha$, $\beta$-insaturé ou son anhydride.

**9.** Composition selon la revendication 8, dans laquelle la résine de polyester insaturé est obtenue par la réaction d'un glycol avec un acide dicarboxylique éthyléniquement insaturé mélangé avec au moins un acide dicarboxylique saturé.

**10.** Composition selon la revendication 8 ou 9, dans laquelle l'acide insaturé éthyléniquement est choisi parmi l'acide maléique, l'acide fumarique, l'acide citraconique, l'acide itaconique, l'acide mésaconique, leurs anhydrides (le cas échéant) et leurs mélanges.

**11.** Composition selon l'une quelconque des revendications 1 à 10, contenant un catalyseur de polymérisation radical libre dans une quantité de 0,1 à 3 parties en poids pour 100 parties en poids de la résine de polyester insaturé.

**12.** Composition selon l'une quelconque des revendications 1 à 11, contenant de plus un accélérateur de durcissement choisi parmi les sels de cobalt, manganèse, vanadium et fer, les $\beta$-dicétones et les amines aromatiques tertiaires, cet accélérateur étant présent dans une concentration de 0,05 à 1 partie pour 100 parties de résine de polyester insaturé.

**13.** Composition selon l'une quelconque des revendications précédentes, réticulable à une température entre la température ambiante et 180 °C.

**14.** Procédé pour la préparation de compositions de résines de polyesters insaturés, réticulés à partir d'une composition de résine de polyester insaturé, comprenant au moins une résine de polyester insaturé et 10 à 60 % en poids, par rapport à la composition, d'un ou plusieurs monomères réticulants, en réticulant un polycondensat d'au moins un glycol monomère ou polymère avec au moins un acide dicarboxylique $\alpha$, $\beta$-insaturé éthyléniquement ou son anhydride avec au moins un monomère réticulant, caractérisé en ce que les monomères de réticulation comprennent au moins un composé de la formule (I)

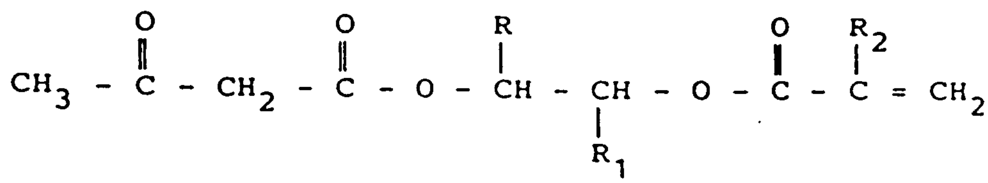

dans laquelle R, $R_1$ et $R_2$ sont H ou un groupe méthyle.

**15.** Procédé selon la revendication 14, caractérisé en ce que le composé de la formule (I) est choisi parmi l'acétoacétoxy-éthylméthacrylate et l'acétoacétoxy-isopropylméthacrylate.

**16.** Procédé selon la revendication 14 ou 15, caractérisé en ce que le composé de la formule (I) est l'acétoacétoxy-éthylméthacrylate.

**17.** Procédé selon l'une quelconque des revendications 14 à 16, caractérisé en ce qu'au moins un composé de la formule (I) est présent dans une concentration de 0,1 à 59 % en poids et au moins un monomère supplémentaire choisi à partir des monoméres de vinyle, des monomères d'ester d'allyle, ou au moins un monomère supplémentaire et présent dans une concentration de 1 à 59,9 % en poids.

**18.** Procédé selon la revendication 17, caractérisé en ce que le monomère supplémentaire est choisi parmi le styrène, le p-méthyl-styrène, le tétrachloréthylène, la N-vinylpyrrolidone, le vinyl-toluène, le diallylphtalate et leurs prépolymères et leurs mélanges.

**19.** Procédé selon la revendication 17 ou 18, caractérisé en ce que le monomère supplémentaire est le styrène.

**20.** Procédé selon la revendication 17 ou 18, caractérisé en ce que le monomère supplémentaire est le diallylphtalate.

**21.** Procédé selon la revendication 14, caractérisé en ce que l'acide $\alpha$, $\beta$-insaturé éthyléniquement est choisi parmi l'acide maléique, l'acide fumarique, l'acide citraconique, l'acide itaconique, l'acide mésaconique, leurs anhydrides (le cas échéant) et leurs mélanges.

**22.** Procédé selon l'une quelconque des revendications 14 à 15, caractérisé en ce qu'un catalyseur de polymérisation à radicaux libres est présent dans une quantité de 0,1 à 3 parties en poids pour 100 parties en poids de la résine de polyester insaturé.

**23.** Procédé selon l'une quelconque des revendications 14 à 22, caractérisé en l'addition d'un accélérateur de durcissement choisi parmi les sels de cobalt, de manganèse, de vanadium et de fer, de $\beta$-dicétones et d'amines aromatiques tertiaires, cet accélérateur étant présent dans une concentration de 0,05 à 1 partie pour 100 parties de résine de polyester insaturé.

**24.** Procédé selon l'une quelconque des revendications précédentes, caractérisé en ce que la réticulation s'effectue à une température entre la température ambiante et 180 °C.